Europäisches Patentamt

European Patent Office

Office européen des brevets

(19)

(11) Numéro de publication: **0 013 683**
A1

(12) # DEMANDE DE BREVET EUROPEEN

(21) Numéro de dépôt: 79102361.7

(22) Date de dépôt: 17.09.79

(51) Int. Cl.³: **G 01 B 3/08, G 01 B 3/00,**
**G 01 C 9/28, B 26 F 1/38**

---

(30) Priorité: 23.01.79 BE 873660

(43) Date de publication de la demande: 06.08.80
Bulletin 80/16

(84) Etats contractants désignés: AT BE CH DE FR GB IT LU NL SE

(71) Demandeur: Papak, Istvan, rue Bara 69,
B-1070 Bruxelles (BE)

(72) Inventeur: Papak, Istvan, rue Bara 69, B-1070 Bruxelles (BE)

(74) Mandataire: Van Schoonbeek, Roland, Cabinet
Bede 13, Avenue Antoine Depage, B-1050 Bruxelles (BE)

---

(54) **Niveau mètre marqueur diviseur.**

(57) Niveau mètre marqueur constitué par un corps muni d'une rainure dans laquelle peuvent coulisser différents éléments mesureurs et marqueurs. Ce corps est de préférence muni d'un niveau bulle à angle.

On prévoit également un élément coulissant muni d'une lame ou d'un autre outil de coupe réglable en profondeur selon l'épaisseur de la matière à découper.

L'appareil est destiné à être utilisé dans la construction et le parachèvement de bâtiments.

EP 0 013 683 A1

## NIVEAU-METRE MARQUEUR DIVISEUR

### SYSTEME ACTUEL

Actuellement pour mesurer et en même temps pour diviser et marquer, il est nécessaire de manipuler un niveau d'eau, un mètre et un crayon (craie, marqueur). Souvent même une latte est nécessaire en plus pour prolonger le niveau trop court et obtenir une ligne droite suffisamment longue sur le mur.

La manipulation simultanée de ces différents objets est pratiquement impossible pour un être humain qui ne possède évidemment que deux mains. Et même s'il y parvient, il ne pourra jamais obtenir qu'une seule mesure. Encore ne pourra-t-il pas en être sûr tant les risques de déplacement de l'un ou l'autre objet est grand. L'obligation de repéter cette gymnastique difficile pour chaque mesure rend le travail de marquage fastidieux et peu précis.

### NOUVEAU SYSTEME

Le niveau-mètre marqueur diviseur est un appareil qui rassemble en un tout solidaire les différents objets nécessaires. Il est à la fois niveau d'eau, mètre et marqueur. Quiplus est, il est capable de procéder à plusieurs marquages tant verticaux qu'horizontaux en une seule manipulation (une main tient l'appareil, l'autre marque), ce qu'aucun appareil existant n'est capable de faire à ce jour. En outre, le niveau-mètre marqueur diviseur peut être personnalisé, c.à.d. qu'on peut lui adjoindre les éléments propres à chaque profession.

../..

## NIVEAU-METRE MARQUEUR DIVISEUR (suite)

Ce dernier point est particulièrement important
pour la rationnalisation du travail. Des mesures
rapides (même dans des positions parfois difficiles
en chantier) permettent non seulement de gagner du
temps, mais en plus leur précision élimine les frais
dus aux erreurs de marquage : forages à recommencer,
découpes trop courtes ou trop longues, etc..

Par sa parfaite adaptabilité à tous les problèmes
du bâtiment, de l'industrie et même du bricolage, le
niveau-mètre marqueur diviseur est un appareil utilisable mondialement et donc susceptible d'une fabrication en très grande série, en dimensions et matières
différentes selon les applications envisagées.

## DESCRIPTION DE L'APPAREIL

Le niveau-mètre marqueur diviseur se compose d'un
corps rainuré permettant le coulissage de différents
éléments mesureurs et marqueurs (voir croquis). Il
est fabriqué dans un alliage d'aluminium ou en matières
plastiques ou autres indéformables aux changements de
températures.

Doté de 3 niveaux d'eau, il est gravé de 3 côtés
de mesures métriques sur toute sa longueur.

Sa fabrication est prévue en plusieurs longueurs,
largeurs, hauteurs, rainures et mesures selon les
utilisation et les professions intéressées.

=:=:=:=:=

0013683

## PLANCHE 1

Dans le corps coulisse une barre graduée
sur 3 côtés, permettant des mesures aussi bien
verticales qu'horizontales.

Les niveaux d'eau garantissent des mesures
parfaitement exactes. Le niveau supérieur gradué
en système métrique est transparent. La rainure
est regarnie à l'intérieur de nylon pour assurer
un meilleur coulissage.

Un système de blocage permet de bloquer le
coulissant lors de la mesure.

Le corps mesure ± 4 cm de haut sur 2,5 cm
de large. L'appareil sera disponible en différentes
longueurs allant de 20 cm jusqu'à 1.50 m.

Cet appareil permet de mesurer en hauteur,
en largeur et en profondeur.

0013683

PLANCHE_2

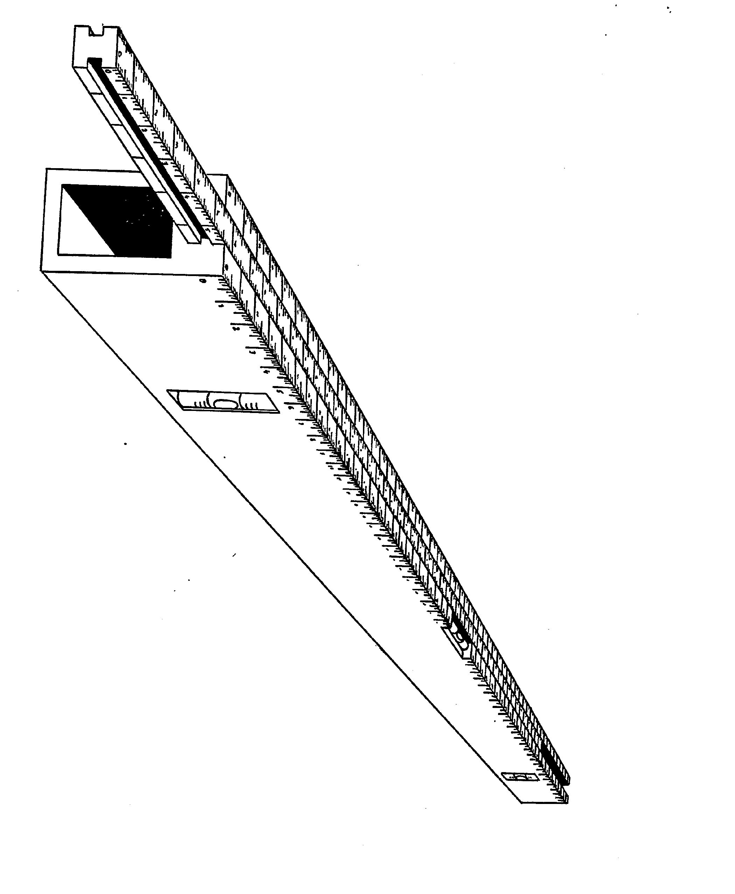

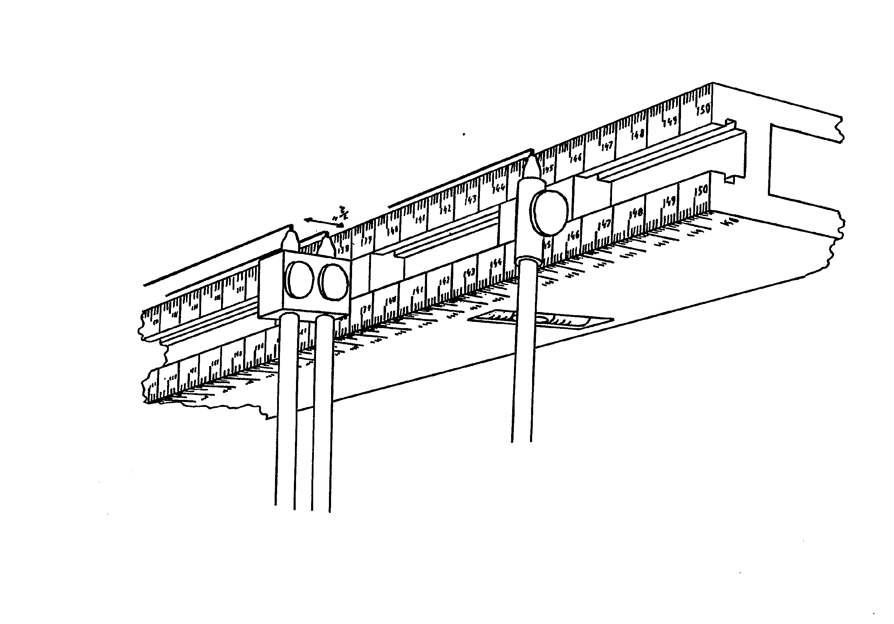

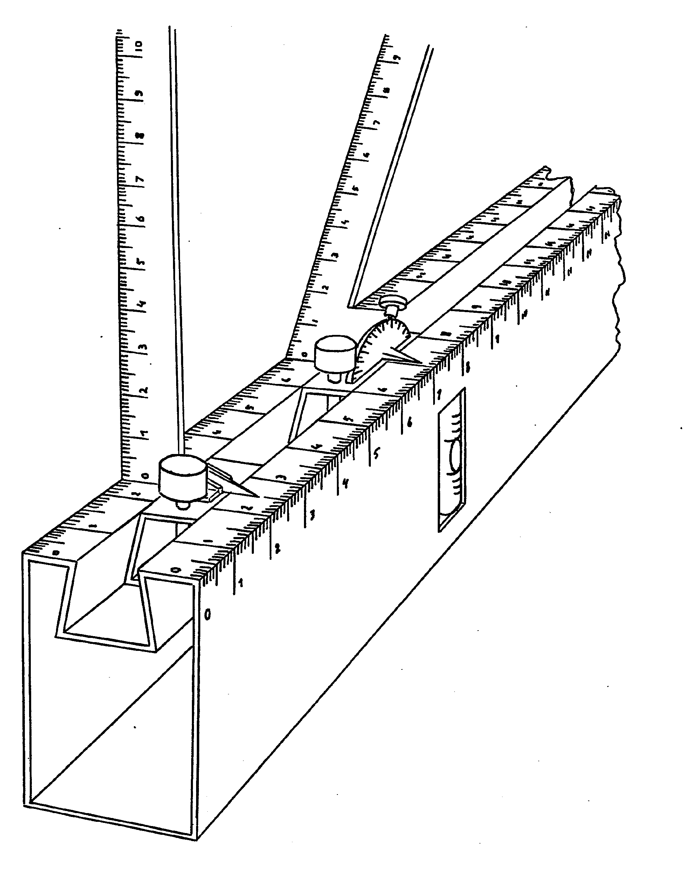

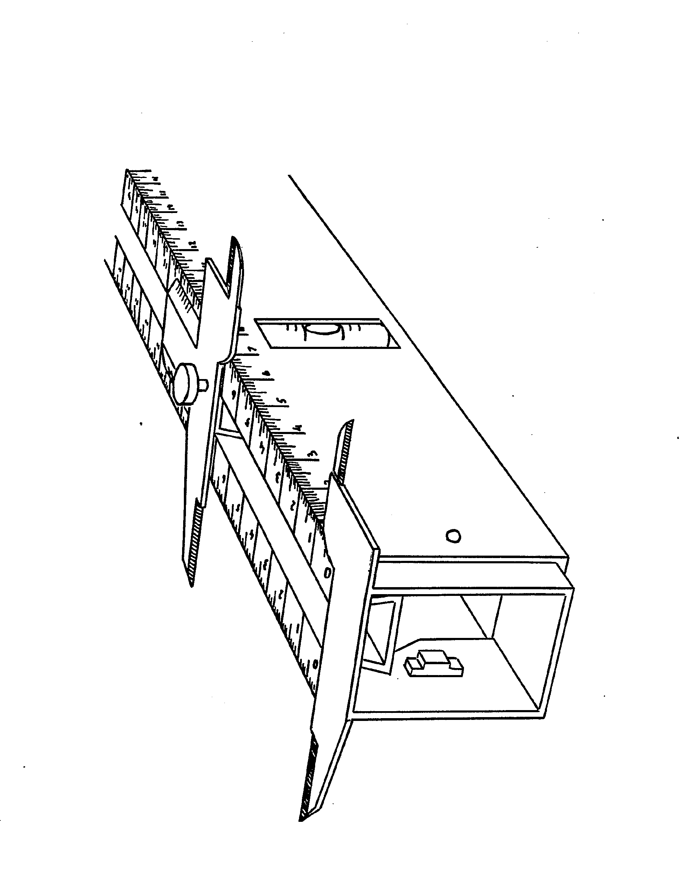

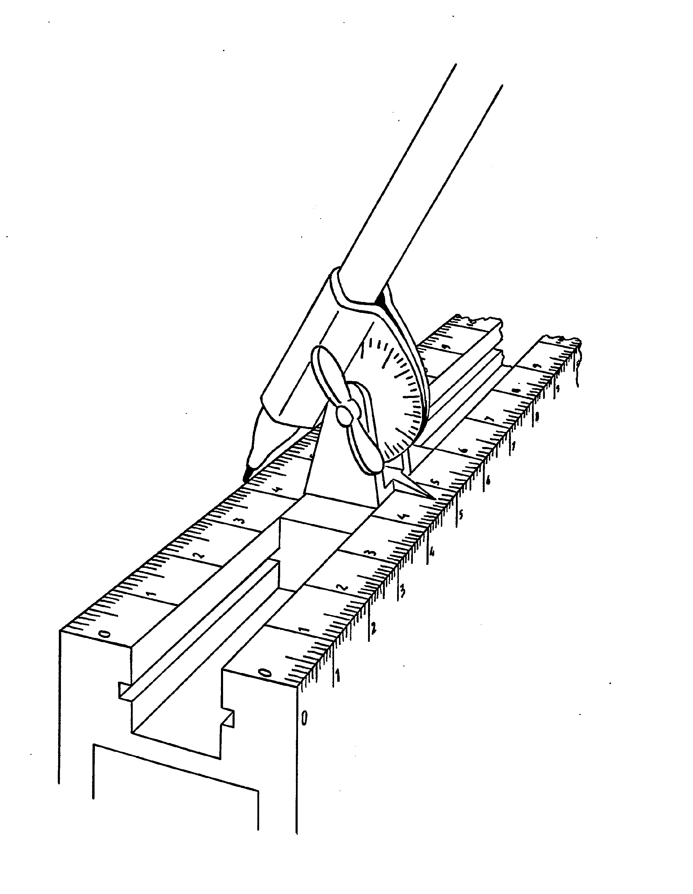

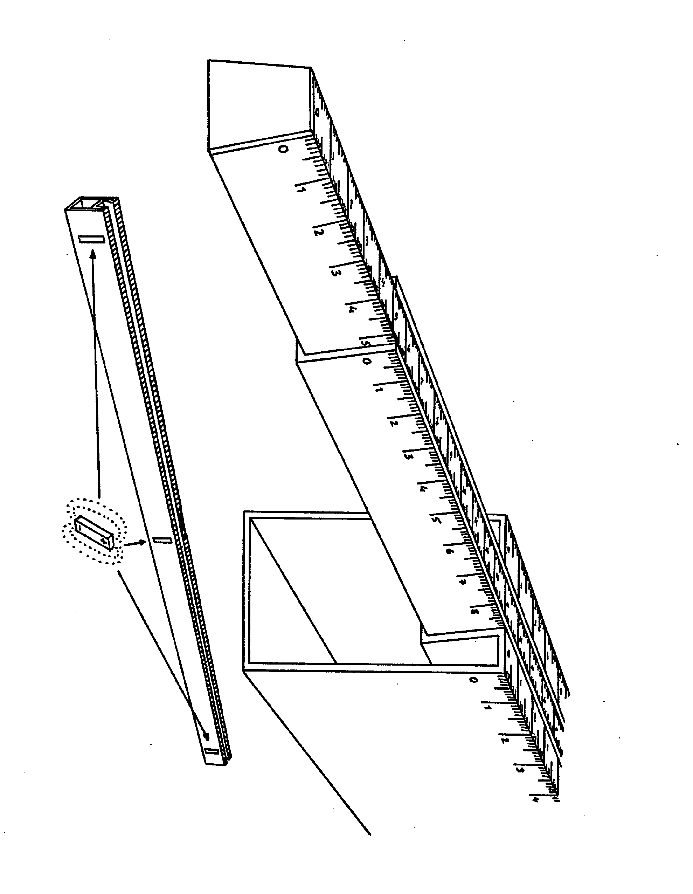

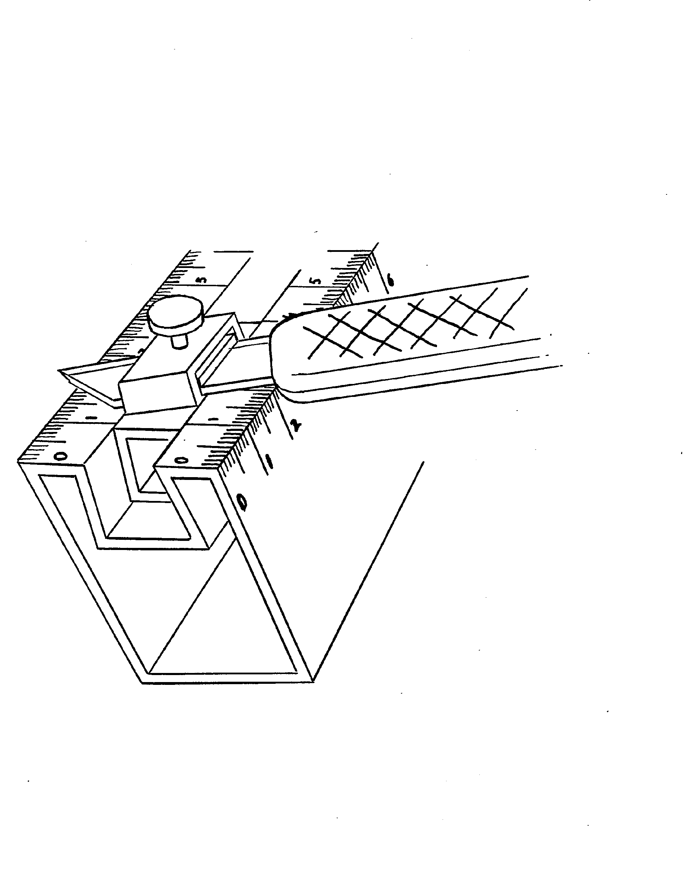

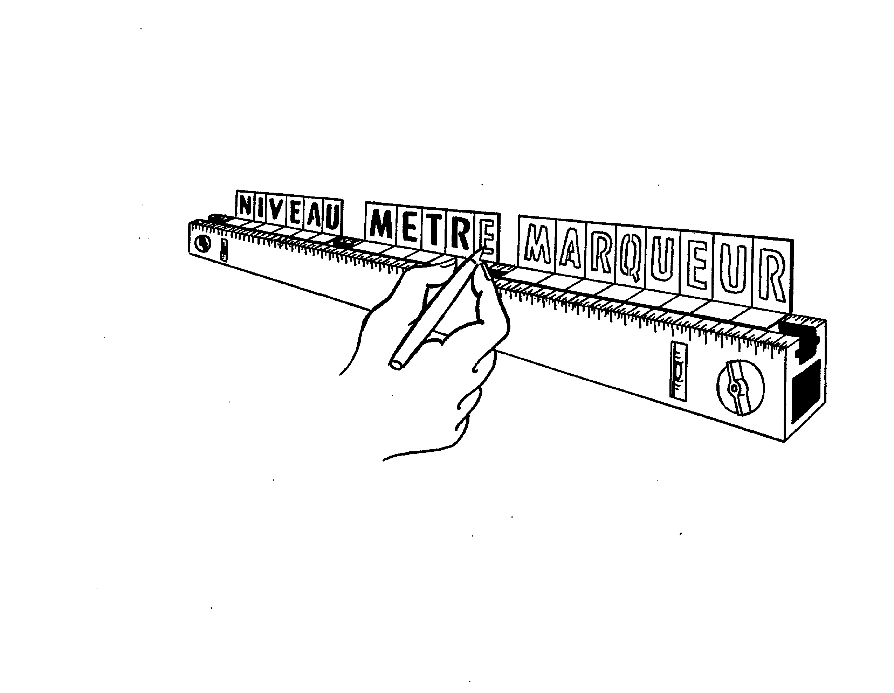

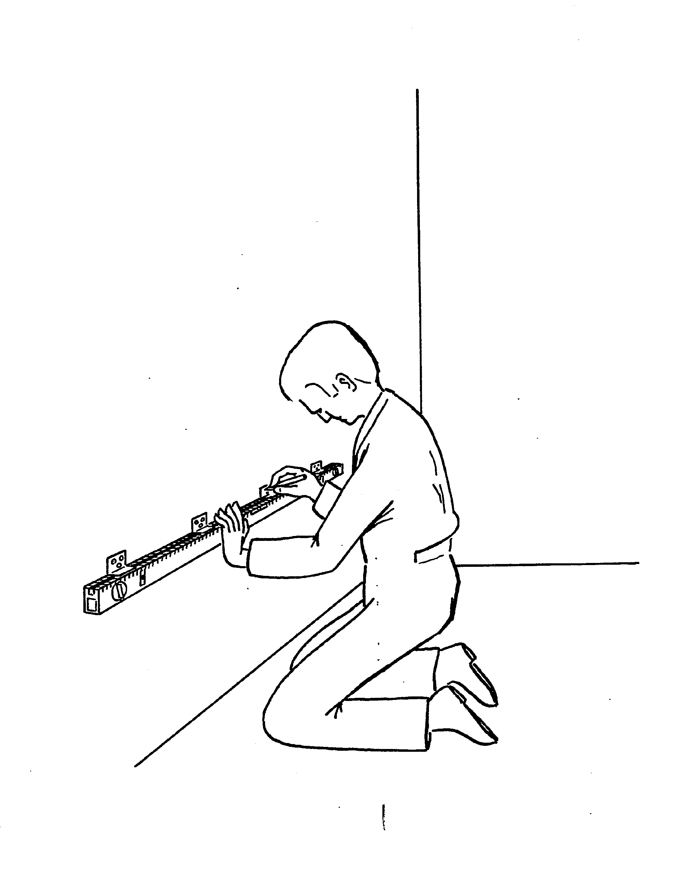

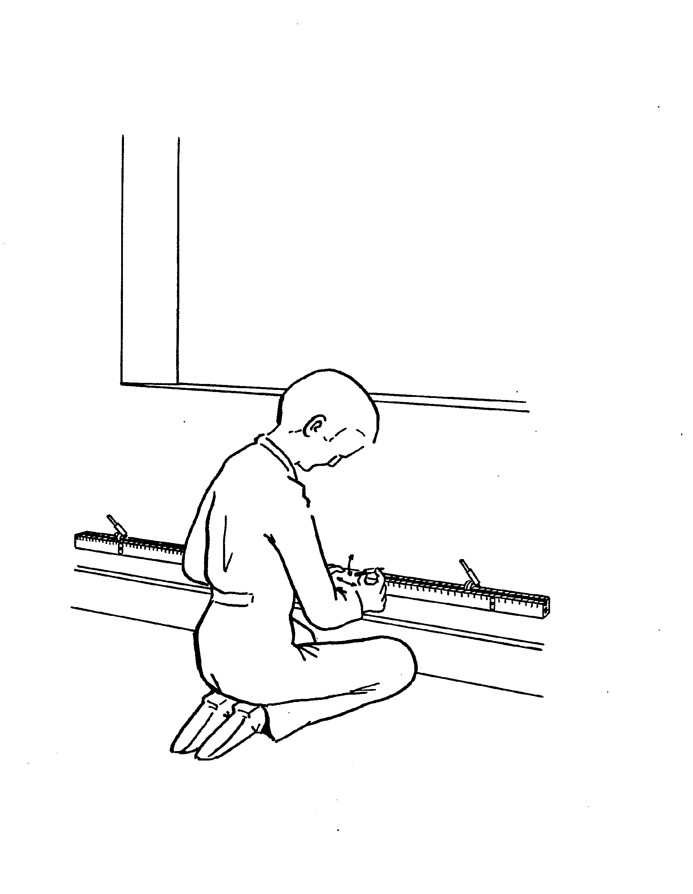

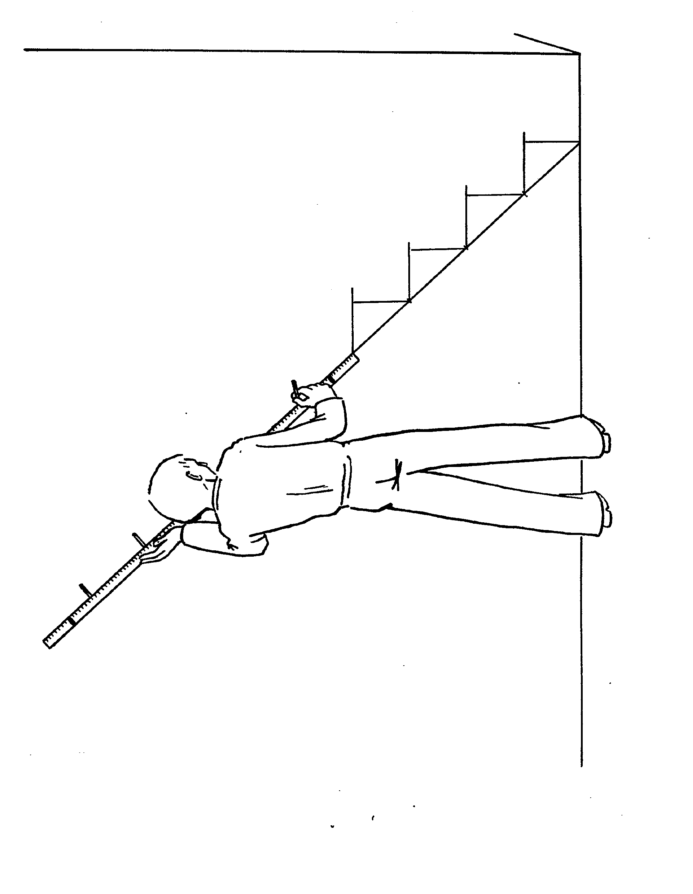

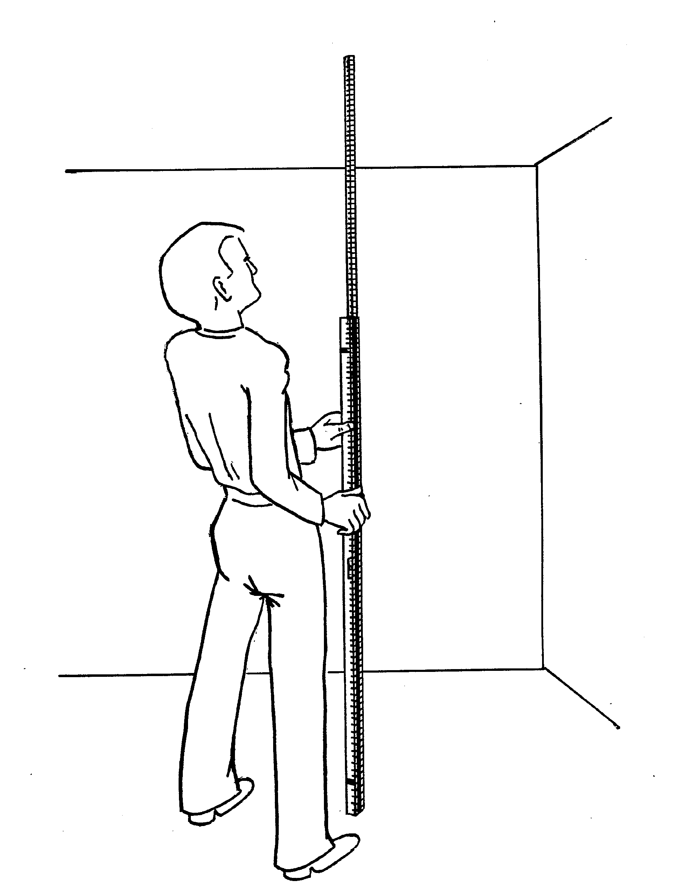

Dans le corps de l'appareil coulisse un
système de marquage orientable permettant le
réglage du marqueur (craies, crayons, feutres,
mines, etc..) et dont le dispositif de serrage
est équipé d'un ressort (cf. planche 4). Ce
dispositif de serrage est conçu de façon à
permettre un marquage à 100% même si la surface
de base n'est pas lisse, car il est à même
d'avancer de plusieurs centimètres.

Le coulissant permet le marquage rapide
sur toute surface.

Il peut même se composer, si besoin est,
d'un double procédé de marquage dont l'écartement
est fonction du corps de métier intéressé (particulièrement utile pour les plombiers, électriciens,
et tous ceux désirant tracer des parallèles à
distance constante).

0013683

<u>PLANCHE 3</u>

Le niveau mètre marqueur peut recevoir un
coulissant à angle droit permettant d'élever des
perpendiculaires de longueurs directement mesurables et à deux sens.

Il peut aussi recevoir un coulissant à
angle variable. Dans ce cas, le corps de l'appareil
sera muni d'un niveau bulle à angle.

Ce montage permet, entre autre, de marquer
et de tracer des verticales alors que l'appareil
est incliné (voir croquis 11), par exemple, marches
d'escalier, etc..

- 6 -    0013683

## PLANCHE 4

Le corps de l'appareil peut recevoir les
deux parties d'un pied à coulisse, une partie
fixe à l'extrémité du corps et une partie mobile
comportant une échelle vernier et un système de
blocage.

On dispose ainsi d'un pied à coulisse géant
permettant des mesures au dixième de mm d'objets
de très grandes dimensions.

Le système de fixation tel qu'indiqué sur
le plan peut également être placé de chaque côté
du coulissant.

PLANCHE 5

Dans le corps de l'appareil coulisse un (ou
des) système(s) de marquage composé(s) d'un support
à serrage par vis papillon orientable à volonté et
muni d'un ressort poussant le marqueur dans toutes
les irrégularités de la surface à marquer.

Selon les corps de métier intéressés, les
coulissants marqueurs peuvent être bloqués d'avance
aux dimensions désirées, permettant plusieurs repérages simultanés.

Des supports de différentes formes permettent
l'usage de marqueurs, de crayons, de craies, etc..
Par un système analogue aux porte-mines, on peut
utiliser, sans besoin de taillage, des mines ou
des craies très fines.

Dans ce montage, du même que dans tous les
suivants, le corps de l'appareil est évidemment
muni de niveaux d'eau verticaux et horizontaux.

0013683

PLANCHE 6

Le niveau mètre marqueur peut être équipé d'un coulissant télescopique permettant un développement plus important qu'avec le coulissant simple.

Il peut être, en plus, muni d'aimants permettant sa fixation sur des surfaces et objets métalliques ferreux.

Le coulissant télescopique est également prévu dans le corps vide de l'appareil ainsi qu'un mètre ruban. Ce coulissant télescopique est prévu en forme carrée et ronde.

Il est également prévu un coulissant télescopique de très petites dimensions et dont le coulissant représente 5 fois sa grandeur. Celui-ci est muni d'un niveau d'eau orientable qui permet de prendre les mesures intérieures d'un tube ou d'un réservoir, etc. par exemple à 8 points différents de la circonférence.

0013683

PLANCHE 7

Dans le corps de l'appareil coulisse un
système de découpe composé d'une lame règlable en
profondeur selon l'épaisseur de la matière à
découper.

Cela permet la coupe en longueur voulue de
tapis, papiers peints, roofing, isolation et
toutes autres matières découpables par lame.

Le système de réglage de la lame permet à
celle-ci d'avancer de plusieurs centimètres de
façon à assurer une précision de découpe de 100%.
La lame est également prévue avec deux pointus permettant la découpe dans les deux sens (avance et
retour).

La lame peut être remplacée par d'autres dispositifs de coupe.

0013683

PLANCHE 8

Dans le corps de l'appareil coulissent des normographes alphabétiques, par lettres séparées, permettant le marquage de textes publicitaires et autres, selon un encombrement préétabli.

Il est également prévu des normographes alphabétiques mobiles qui peuvent être colorés et appliqués directement sur la surface voulue.

Cet appareil est également muni d'un niveau d'eau orientable qui permet de reproduire des lettres même sur un plan incliné.

Comme pour les normographes alphabétiques, un système de croix permet le marquage et le fixage du nombre voulu de colliers de serrage, etc..

L'appareil est muni de ventouses pour usage sur des surfaces lisses.

0013683

## PLANCHE 9

Dans le corps de l'appareil coulissent des gabarits permettant le marquage de plusieurs points de fixation (ex: l'emplacement des vis d'un ou de deux lavabos en une seule manoeuvre).

Le blocage préétabli des gabarits est particulièrement utile dans le cas de marquages en série (ex: l'emplacement précis de nombreux lavabos de types identiques dans un même immeuble).

Les extrémités de l'appareil (voir plan) sont munies de ventouses pour surfaces lisses telles que vitrage, carrelage, tôle, etc..

Cet appareil peut également être équipé de deux pieds gradués en système métrique fixés à ses extrémités permettant d'opérer à la hauteur voulue. En se servant de l'équerre de droit on repère ainsi le centre, la hauteur et la largeur.

0013683

## PLANCHE 10

Le marquage des points d'attache d'un radiateur ou d'un autre objet fixable à un mur, se fait
avec plusieurs marqueurs fixés d'avance aux distances
voulues et en se repérant aux niveaux d'eau horizontaux.

(Voir planche 4 pour le détail des coulissants
marqueurs).

0013683

PLANCHE_11

Pour obtenir la position de plusieurs marches d'escalier simultanément on fixe plusieurs coulissants marqueurs aux distances voulues, comme dans le cas des radiateurs de la planche 10.

PLANCHE 12

Le niveau mètre marqueur permet des mesures
en hauteur, même au milieu d'une pièce.

On observe la parfaite verticalité de l'appareil
par les niveaux verticaux, on actionne le coulissant
jusqu'à ce qu'il rencontre le plafond et on le bloque.
La lecture permettant de mesurer en hauteur, en
largueur et en profondeur se fait alors aisément par
une des échelles métriques.

0013683

1

<u>REVENDICATIONS</u>

1. Niveau mètre marqueur destiné à être utilisé dans la construction et le parachèvement de bâtiments, constitué par un corps muni d'une rainure dans laquelle peuvent coulisser différents éléments mesureurs et marqueurs.

2. Niveau mètre marqueur suivant la revendication 1 caractérisé en ce que l'élément coulissant comprend une partie disposée à angle droit par rapport au corps rainuré de manière à permettre d'élever des perpendiculaires de longueurs directement mesurables.

3. Niveau mètre marqueur suivant les revendications 1 et 2 caractérisé en ce que la partie portée par l'élément coulissant est disposée suivant un angle variable et en ce que dans ce cas le corps de l'appareil est muni d'un niveau bulle à angle.

4. Niveau mètre marqueur suivant la revendication 1 caractérisé en ce que dans le corps de l'appareil peuvent coulisser des plaquettes dans lesquelles sont découpés des signes de marquage, par exemple des croix.

5. Niveau mètre marqueur suivant la revendication 1, caractérisé en ce que dans le corps de l'appareil peut coulisser un outil de découpe composé d'une lame ou d'un autre outil de coupe réglable en profondeur selon l'épaisseur de la matière à découper.

6. Niveau mètre marqueur suivant la revendication 5 caractérisé en ce que la lame porte deux côtés tranchants permettant la découpe dans les deux sens.

7. Niveau mètre marqueur suivant la revendication 1 caractérisé en ce que le corps de l'appareil peut recevoir un pied à coulisse formé de deux parties : une partie fixe à l'extrémité du corps et une partie mobile comportant une échelle vernier et un dispositif de blocage de manière à permettre des mesurages intérieurs et extérieurs.

0013683

0013683

Office européen
des brevets

**RAPPORT DE RECHERCHE EUROPEENNE**

0013683
Numéro de la demande

EP 79 10 2361

| Catégorie | Citation du document avec indication, en cas de besoin, des parties pertinentes | Revendication concernée |
|---|---|---|
| | **DOCUMENTS CONSIDERES COMME PERTINENTS** | |
| X | <u>BE - A - 868 497</u> (I. PAPAK)<br>* Titre; ensemble du brevet; figures 1-10,12 * | 1,4 |
| X | <u>FR - A - 2 332 515</u> (SOC. DE <u>MECANIQUE D'IRIGNY</u>)<br>* Titre; page 1, ligne 36 à page 2, ligne 25; figures 1, 2 * | 1,7 |
| X | <u>US - A - 3 775 853</u> (R. DORET; <u>M. DORET</u>)<br>* Titre; colonne 1, ligne 43 à colonne 2, ligne 31; figures 1-4 * | 1-3 |
| X | <u>FR - A - 2 277 322</u> (T. FARAUD)<br>* Titre; page 3, lignes 11-29; figures 1-4 * | 1,7 |
| X | <u>US - A - 3 522 657</u> (R.R. METRULIS)<br>* Titre; ensemble du brevet; figures 1-5,7 * | 1,3 |
| X | <u>US - A - 3 065 546</u> (L.H. BROCK-<u>LANDER</u>)<br>* Titre; ensemble du brevet; figures 1-5 * | 1-3 |
| | ./. | |

**CLASSEMENT DE LA DEMANDE (Int. Cl. 3)**

G 01 B 3/08
       3/00
G 01 C 9/28
B 26 F 1/38

**DOMAINES TECHNIQUES RECHERCHES (Int. Cl. 3)**

G 01 B 3/00
       3/08
       3/56
G 01 C 9/28
B 43 L 7/00
       7/08
B 26 F 1/38

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-04-1980 | VISSER |

OEB Form 1503.1  06.78

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | CA - A - 1 039 496 (D.C. REMPEL)<br>* Titre; page 2, ligne 24 à page 4, ligne 29; figures 1,2,7,8 *<br><br>-- | 5,6 | |
| X | DE - B - 1 114 781 (J.R. MIDDENTS)<br>* Titre; colonne 4, ligne 4 à colonne 5, ligne 25; figures 1-4 *<br><br>---- | 1,5,6 | |
| | | | **DOMAINES TECHNIQUES RECHERCHES (Int. Cl. ³)** |